# EUROPÄISCHE PATENTSCHRIFT

(11) **EP 0 629 770 B1**
(45) Veröffentlichungstag und Bekanntmachung des Hinweises auf die Patenterteilung: **11.11.1998**
(21) Anmeldenummer: 94108746.2
(22) Anmeldetag: 08.06.1994
(51) Int. Cl.: F01D 5/28, C22C 1/09, B22F 7/06

(54) **Verfahren zur Herstellung eines Schaufelringes für trommelartige Rotoren von Turbomaschinen**
Process for preparing a blade ring for a drum rotor of a turbine
Procédé pour la préparation d'un anneau à aubes pour des rotors tambour d'une turbomachine

(30) Priorität: 15.06.1993 DE 4319727
(43) Veröffentlichungstag der Anmeldung: 21.12.1994
(73) Patentinhaber: MTU MOTOREN- UND TURBINEN-UNION MÜNCHEN GMBH, 80976 München (DE)
(72) Erfinder: Krüger, Wolfgang, D-85293 Reichertshausen (DE); Wei, William, Dr., D-80804 München (DE)

(56) Entgegenhaltungen:
- DE-A- 2 544 237
- FR-A- 2 522 647
- US-A- 4 867 644

## Beschreibung

Die Erfindung bezieht sich auf ein Verfahren zur Herstellung eines Schaufeiringes für trommelartig aufgebaute Rotoren von Turbomaschinen, insbesondere Rotoren für Axialverdichter von Gasturbinentriebwerken, sowie auf ein Verfahren zur Herstellung einer Rotortrommel.

Aus der DE-PS 31 01 250 ist ein Verdichterrotor für Gasturbinentriebwerke bekannt, bei dem der trommelförmige Rotor aus teilweise in versteifender Kasten-Bauweise aufgebauten Ringelementen zusammengesetzt sein soll; an jeweils einander zugekehrten Endseiten sollen die Ringelemente durch Zentrierlappen aneinander abgestützt sein, die in über dem Umfang verteilte Aussparungen zwischen den Schaufelfüßen eines Laufschaufelgitters eingreifen; mit hammerkopfartigen Fußenden sollen die Laufschaufeln radial an beiden Endseiten der Ringelemente abgestützt sein; an beiden Endseiten an die jeweiligen Füße der Laufschaufeln angrenzende Abschnitte der Ringelemente sollen als Träger sich über dem Umfang erstreckender, faserverstärkter Versteifungsringe ausgebildet sein. Bei diesem bekannten Rotorkonzept wird u. a. folgendes als nachteilhaft angesehen:
- Es liegt keine materialseitige form- und kraftschlüssige, absolut feste Faserringverankerung vor; thermische sowie Umfangs- und Radial-Kraftbeanspruchungen können insbesondere auch mit Rücksicht auf häufige instationäre Betriebszustände, also Last- und Drehzahlschwankungen, zu unerwünschten Relativbewegungen und Lockerungen der Faserringe führen;
- konstruktionsbedingte Anordnungs-Vorgabe für die Faserringe, so daß keine individuell auf die jeweils umfänglich und radial größten Ring-Massenbelastungen abgestimmte Anordnung der Faserringe möglich ist;
- bestimmte, massive und schwere Schaufelkonstruktion;
- Auswechseln einer Schaufel (Schadensfall) setzt Lösung des Ring- bzw. Trommelverbunds voraus;
- Faserring außen offen zugänglich, also der Strömung und entsprechenden Temperaturen unmittelbar ausgesetzt; sowie erosions- und partikel-gefährdet;
- festigkeitsmäßig kritischer Verbund als Folge sich überlappender, loser Stützverbindung durch schmale Zungen zwischen axialen Fußaussparungen;
- Herstellungs-Schwierigkeiten; Faserringe, die unter Aufrechterhaltung ihrer in sich geschlossenen Bauweise und Festigkeitsstruktur in Umfangsnuten eingesetzt bzw. eingeschrumpft werden müssen.

In US-A-4 867 644 ist ein Rotorelement aus Metall beschrieben, in dem ein Faserring zur Verstärkung aufgenommen ist. Bei der Herstellung werden zwei Hälften einer Radscheibe, die mit gegenseitigen Halbaussparungen versehen sind, zusammengefügt. Beim Zusammenfügen entsteht eine Kammer, die den zuvor eingefügten Faserring aufnimmt. Anschließend werden die beiden Scheibenhälften zur Vorfixierung verschweißt, und danach wird die Anordnung heißisostatisch gepreßt. Anschließend wird das Produkt nachbearbeitet. Das Verfahren ist sehr aufwendig, da z. B. eine hochpräzise Vorfertigung der einzelnen Teile notwendig ist. Zusätzlich besteht das Problem, daß in den Grenzflächen Defekte auftreten können, und daß bei unzureichender Präzision die Gefahr einer Leckung des Faserrings besteht. Außerdem stellen die Verbindungsflächen der Scheibenhälften ein Sicherheitsrisiko dar.

Der Erfindung liegt somit die Aufgabe zugrunde, ein Verfahren anzugeben, mit dem für einen trommelförmigen Rotor auf verhältnismäßig einfache Weise ein gewichtlich leichter Schaufelring mit hoher Festigkeit geschaffen werden kann. Auch soll ein Verfahren angegeben werden, mit dem auf verhältnismäßig einfache Weise ein Rotor für Axialverdichter von Gasturbinentriebwerken hergestellt werden kann, der hohen Umfangs- und Radialbelastungen standhält.

Die gestellte Aufgabe ist mit den Merkmalen der Patentansprüche 1 und 13 erfindungsgemäß gelöst.

Ohne an eine gewichtlich schwere und herstellungsmäßig teuere Radscheiben-Konstruktion gebunden zu sein, kann so eine vergleichsweise gewichtlich leichte Rotor-Konstruktion in Trommelbauweise geschaffen werden, bei der die Schaufelringe untereinander bzw. mittels Zwischenringen bzw. örtlich mittels zu "Wellenstummeln" auslaufenden Ringelementen verschweißt werden können, z. B. durch Reib- oder Elektronenstrahl-(EB)-Schweißung. Dabei sind die Schaufelringe im Rahmen der auftretenden Drehzahl- und Fliehkraftbeanspruchungen (Umfangs- und Radialkraftbeanspruchung) örtlich gezielt durch die Faserringe verstärkt, die mit ihren Fasern zur Hauptsache in einer sich über den Umfang erstreckenden Richtung angeordnet sind. Als bereits vorgefertigte "Halbzeuge" vorliegend, sind die Faserringe im Rahmen des Herstellungsprozesses absolut fest und betriebsstabil nach dem heißisostatischen Press-Prozeß (HIP) in den metallischen Werkstoff des Schaufelringes eingebunden. Im Wege der beim HIP verwendeten Drücke und Temperaturen können die Faserringe im Wege ihrer Metallmatrix mit dem zum HIP pulverförmig z. B. einer Metall-Kapsel zugeführten metallischen Werkstoff eines Schaufelringes durch Oberflächendiffusion (Diffusions-Schweißung) fest verbunden werden. Der Schaufelring-Rohling, der nach dem HIP noch gegenüber dem Sollmaß ein Übermaß aufweist, kann so spanabhebend, z. B. durch Drehen und/oder Schleifen auf sein Fertigmaß nachbearbeitet werden, ohne daß eine Beschädigung der Faserringe auftritt.

Im Rahmen der Erfindung ist eine ringintegrale "Vor-Schaufelfertigung" möglich; es ist ferner z. B. eine äußere oberflächenseitige und ringintegrale Fuß-Stummel-Vorfertigung von über dem Umfang sich erstreckenden Vertiefung möglich, die in entsprechender Nachbearbeitung Axialnuten für die Füße nachträglich zu montierender Laufschaufeln ausbilden sollen. Bei auf Sollmaß fertig bearbeiteter Ringoberfläche bzw. Fertig bearbeiteten Fußstummeln können die Schaufelprofile bzw. Schaufeln durch Schweißung, z.B. lineare Reibschweißung, mit der betreffenden Ringoberfläche bzw. den Fußstummeln fest verbunden werden.

Ein weiterer Vorteil des erfindungsgemäßen Verfahrens ist es, daß die Faserringe dem Prozeß-Fluid (Kompressorluft, Gas, Heißgas) nicht unmittelbar ausgesetzt sind, so daß sie keiner unmittelbaren fluidischen Temperaturbeeinflussung bzw. keiner chemischen Beeinflussung (Korrosion) bzw. keiner Abrasion (durch Partikel im Fluid) ausgesetzt sind.

Insbesondere im Rahmen der durch das heißisostatische Pressen möglichen Diffusionsverbindung sollen für den Metallpulverwerkstoff des Schaufelringes einerseits sowie andererseits für die metallische Matrix der Faserringe bzw. für die äußere metallische Faserkernbeschichtung die jeweils gleichen metallischen Werkstoffe bzw. zumindest jeweils chemisch-physikalisch gleichartige Werkstoffpaarungen vorgesehen werden.

Vorteilhafte Ausgestaltungen der Erfindung nach Anspruch 1 ergeben sich aus den Merkmalen der Patentansprüche 2 bis 14.

Anhand der Zeichnungen ist die Erfindung beispielsweise weiter erläutert; es zeigen:
- Fig. 1: den erfindungsgemäß hergestellten Schaufelring an einem Rotortrommelabschnitt eines Axialverdichters mit Zwischenringen als Dichtringen sowie mit Leit- und Laufschaufeln im Verdichterkanal, hier als achsparallele Schnittdarstellung und in erster Ausführung und Ausbildung des Schaufelringes mit Axialnuten für lösbare Laufschaufeln,
- Fig. 2: einen weiteren erfindungsgemäß hergestellten Schaufelring in Ansicht und grundsätzlicher Ausbildung des Rotortrommelabschnitts gemäß Fig. 1, hier jedoch mit in verschiedenen koaxialen Ringebenen zueinander versetzter Anordnung der Faserringe sowie mit einer Schweißverbindung der Laufschaufeln, fußseitig an vorgefertigten Sockeln des Schaufelringes,
- Fig. 3: eine für das Herstellverfahren praktikable erste Faserringhalterung an einer hermetisch abdichtbaren Ringkapsel für den HIP-Prozeß, die teilweise abgebrochen und durch einen kompletten Ringquerschnitt verdeutlicht ist,
- Fig. 4: eine für das Herstellverfahren praktikable zweite Faserringhalterung in Ansicht und Schnittdarstellung der Ringkapsel gemäß Fig. 3,
- Fig. 5: ein lediglich einzelner Schaufelring in entsprechender Schnittdarstellung und Zuordnung zum trommelförmigen Rotorabschnitt nach Fig. 1 und 2 zu verstehen, und unter Verdeutlichung einer mit dem Schaufelring werkstoffintegralen Vorfertigung der Laufschaufeln und
- Fig. 6: einen achsparallel geschnitten dargestellten Schaufelringabschnitt unter Zuordnung eines von mehreren Faserringen, hier mit äußeren schichtartig aufgetragener metallischer Ummantelung eines Faserkerns.

An einem trommelförmigen Rotorabschnitt 1 für einen Axialverdichter eines Gasturbinentriebwerks ist mit 2 ein erfindungsgemäß hergestellter Schaufelring bezeichnet, der nach Fertigstellung an seinen äußeren Umfangskanten gemäß Linien L,L1 mit entsprechenden Umfangskanten von zwischenringen 3,4 verschweißt worden ist; mit radial vorstehenden, sich über dem Umfang erstreckenden Dichtlippen D,D1 bilden die Zwischenringe 3,4 gegenüber am radial inneren Ende der jeweiligen Leitschaufeln 5,6 angeordneten, örtlich abgestuften Einlaufbelägen E,E1 Labyrinth-Dichtungen aus; der Zwischenring 4 weist auf der rechten Seite einen Flansch 7 auf, mit dem er z.B. mit einem weiteren Verdichterrotorabschnitt oder mit der den Verdichter antreibenden Turbinenwelle verschraubt werden kann; die Leitschaufeln 5,6 sind radial außen fußsseitig am Verdichtergehäuse 7 fest verankert; der fertige Schaufelring 2 ist mit lösbaren Laufschaufeln 8 bestückt, die radial innen, mit ihren Füßen, z.B. schwalbenschwanzartigen Füßen, in entsprechend ausgeformten, über dem äußeren Umfang des Schaufelringes 2 verteilten Axialnuten 9 gehalten sind.

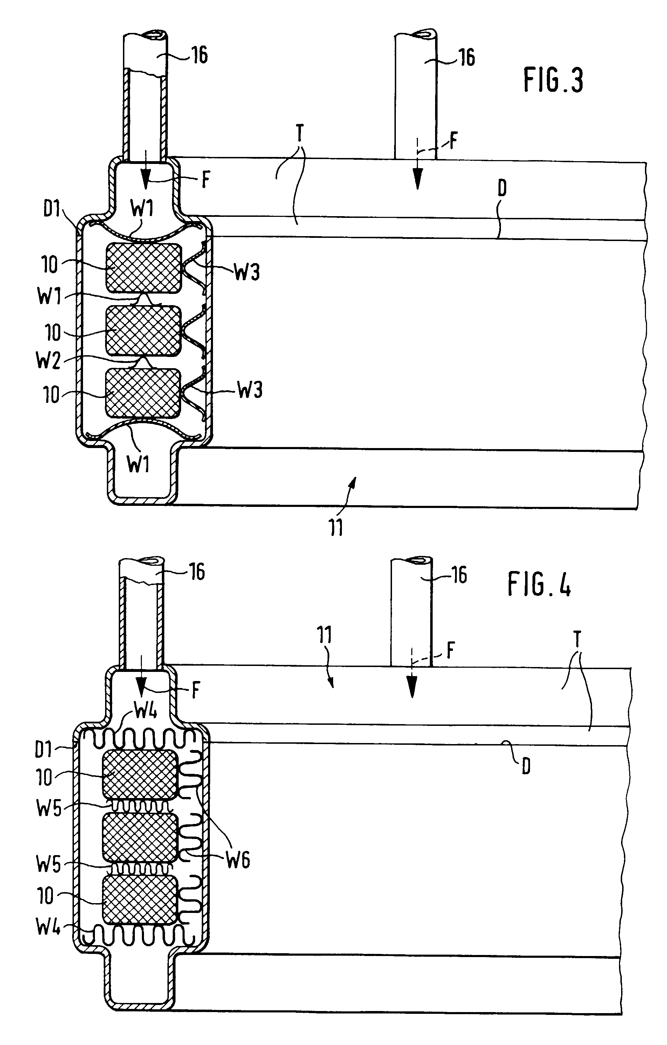

Der Schaufelring 2 weist mit ihren Mitten in einer gemeinsamen Ringebene jeweils koaxial zur Verdichterachse in den metallischen Werkstoff für den Schaufelring fest eingebundene Faserringe 10 auf, mit denen der Schaufelring 2 hauptsächlich im Hinblick auf Umfangs- und Radialkräfte verstärkt wird; die Faserringe 10 weisen in eine Metallmatrix eingebettete Fasern auf, wobei die Überkreuz-Schraffur einzelne Faserlagen in der Matrix verdeutlichen soll mit hauptsächlich in Ringumfangsrichtung vorliegender Faserorientierung. Der Schaufelring 2 wird durch heißisostatisches Pressen (HIP) hergestellt, wobei in eine vorgegebene Ringkapsel 11 (s.h. auch Fig. 3 und 4) eingegebenes Metallpulver eine feste und formschlüssige Verbindung mit dem metallischen Matrixwerkstoff der Fasern, insbesondere durch Oberflächendiffusion, bereitstellt.

Für das Verfahren wird davon ausgegangen, daß die Faserringe 10 als für den Fertigungsprozeß fertige "Halbzeuge" vorliegen.

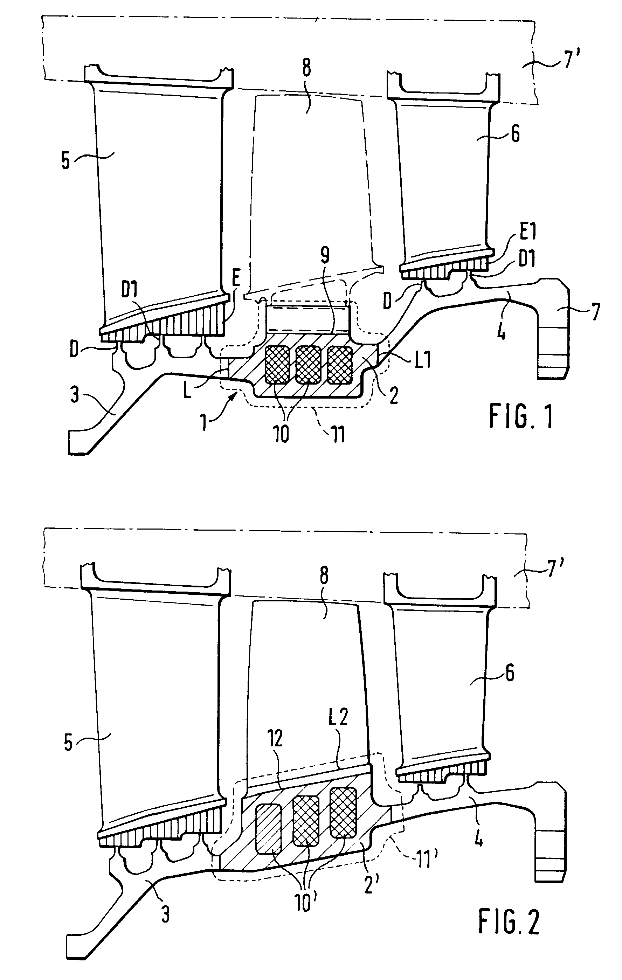

Im Hinblick auf Fig. 1 ist die Ringkapsel 11 so dimensioniert und vorgeformt, daß gleichzeitig beim HIP-Prozeß die Axialnuten 9 unter Belassung von Scheibenhöckern grob mit vorgefertigt werden; ferner erkennt man aus Fig. 1, daß die gesamte Ringkapsel eine gegenüber dem gezeichneten fertigen Schaufelring 2 volumenmäßig größere und gröber strukturierte Formgebung aufweist, bedingt durch beim HIP auftretenden Material schwund (Pressung) sowie etwaige Formschwankungen, die mit anderen Worten ein gewisses Übermaß des fertigen Ring-Rohlings erzwingen, bevor dieser auf die notwendigen und gezeichneten Dimensionen spanabhebend nachbearbeitet wird.

Unter Verwendung gleicher Bezugszeichen für gleiche oder im wesentlichen gleiche Bauteile und Funktionen nach Fig. 1 verkörpert Fig. 2 eine gemäß dem Verfahren hergestellte fertige Variante das Laufschaufelringes 2' mit relativ zur Verdichterlängsachse gleichförmigem Schrägverlauf der Innen- und Außenwand, wobei im Wege der Herstellung durch das HIP die jeweiligen Faserringe 10' in relativ zur Verdichterlängsachse abgestuften Ringebenen zueinander versetzt und fest in den metallischen Werkstoff des Schaufelringes 2' eingebunden sind. Dabei ist die verwendete Ringkapsel 11'dem Schrägverlauf des fertigen Schaufelringes 2' gemäß vorkonturiert sowie im radial äußeren Umfangsbereich so vorgeformt, daß über dem Umfang gleichmäßig verteilte axiale Fußstümpfe 12 bei der Ringherstellung grob mitgefertigt werden, die später auf das notwendige Endmaß sowie die notwendige Profilkontur abgearbeitet werden, so daß fertige Laufschaufeln 8 mit ihrer fußseitigen Profilendkontur bündig mit den fertigen Fußstümpfen 12 entlang der Linie L2 verschweißt werden können.

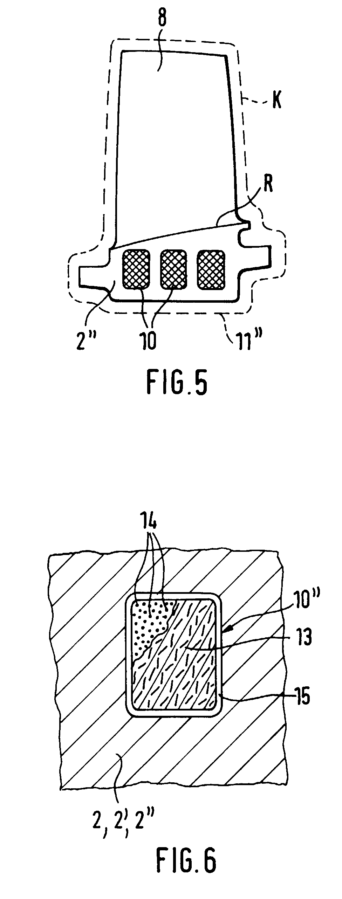

Auf das Trommelrotorkonzept nach Fig. 1 oder 2 anwendbar, verkörpert Fig. 5 eine Abwandlung eines erfindungsgemäß hergestellten und fertigen Schaufelringes 2'' -mit Anordnung der Faserringe 10 nach Fig. 1-wonach die Laufschaufeln 8 hier integral gefertigte Bestandteile des Schaufelringes 2" sind. Hierzu kann die zu verwendende Ringkapsel 11'' unter gleichzeitiger Vorfertigung eines sich an der Außenseite des Ringes über dem Umfang anschließenden Profilabschnitts (Kapselkontur K) vergrößert vorgeformt sein; dieser Profilabschnitt kann nach dem HIP-Prozeß zu einzelnen über dem äußeren Ringumfang R verteilten Laufschaufeln 8 (wie dargestellt) in ein oder mehreren Schritten nachbearbeitet werden.

Fig. 6 veranschaulicht die Verwendung eines von mehreren Faserringen 10'', der beim HIP-Prozeß für die Herstellung des Schaufelringes 2 (Fig.1) bzw. 2' (Fig.2) bzw. 2'' (Fig.5) verwendbar ist und der aus einem Kern 13 mit sich in Umfangsrichtung des Schaufel- bzw. Faserringes erstreckenden und in eine Metallmatrix fest eingebundenen Fasern 14 gefertigt wird; dabei soll der Kern 13 gänzlich mit mindestens einer fest haftenden metallischen Oberflächenschicht 15 versehen werden; diese Oberflächenschicht 15 kann bei der Schaufelringfertigung durch heißisostatisches Pressen (HIP) mit dem metallischen Werkstoff für den Schaufelring diffusionsverbunden werden. Bei der Herstellung der Faserringe können die Fasern 14 zunächst einzeln metallisch beschichtet werden; die einzelnen Metallschichten der Fasern 14 können durch einen folgenden HIP-Prozeß zu einer gemeinsamen Fasermatrix diffusionsverschweißt werden.

In Kombination mit einem zu fertigenden Schaufelring, z.B. 2 nach Fig. 1, ist eine vorteilhafte Verfahrensausgestaltung der Erfindung wie folgt charakterisierbar:
- Anordnung der durch Fasern verstärkten Ringe 10 in der Ringkapsel 11 unter gegenüber dieser und gegenseitiger pulverdurchlässiger und elastischer Beabstandung,
- Befüllung der Ringkapsel 11 einschließlich der zwischen den Ringen 10 belassenen Zwischenräume mittels des Metallpulvers, - Füllrichtung F über Rohrleitungen 16 (Fig.3 und 4),
- Hermetischer Verschluß von Pulvereinfüllöffnungen der Ringkapsel, z.B. durch Quetschung der Rohrquerschnitte,
- Durchführung des HIP-Vorgangs über die Ringkapsel 11, wobei die Ringe 10 in den metallischen Werkstoff des Schaufelringes fest eingebunden werden,
- Entfernung der Ringkapsel 11,
- spanabhebende Endbearbeitung des Schaufelring-Rohlings.

Zur Durchführung des Verfahrens vorgesehene Abstandhalterungsmittel für die Faserringe 10, mit denen diese vor Pulverbefüllung F betriebssicher bzw. unverrückbar in der Kapsel 12 im erforderlichen gegenseitigen Abstand sowie im Abstand zur Kapselinnenumwandung verankert werden können, gehen aus Fig. 3 und 4 hervor.

Es handelt sich dabei um pulverdurchlässige, elastische membranartige Wellkörper W1,W2,W3, die aus Feindrähten maschenartig aufgebaut sind, um eine allseitig gleichförmige Verteilung des Metallpulvers zu gewährleisten, trotz angestrebter Stützwirkung und Halterungen der Faserringe 10 in der Kapsel 11.

Fig. 4 verkörpert im Gegensatz zu Fig. 3 eine etwas formsteifere Halterung und Abstützung der Faserringe 10 in der Kapsel 11, indem grundsätzlich die Wellkörper W4,W5,W6 jeweils eine größere Anzahl aufeinanner folgender Wellungen aufweisen. Wie ferner aus Fig. 3 und 4 ersichtlich ist, weist die Kapsel 11 jeweils ein lösbares Teil T auf, daß entlang gegenseitiger ringumfänglicher Stoßkanten D,D 1 erst dann auf den volumenmäßig größeren Restteil der Kapsel 11 dicht aufgesetzt wird, wenn die Faserringe 10 bereits unter Beabstandung eingesetzt worden sind. Mit dem Aufsetzen des lösbaren Teils T erfolgt gleichzeitig die relative gegenseitige elastische Festlegung der Faserringe 10.

Der heißisostatische Pressen (HIP) erfolgt bei angepaßter Temperaturbehandlung in einem Ofen, wobei die betreffende Kapsel, z.B. 11, einem angepaßten und allseitig gleichförmigem Druck ausgesetzt wird. Unter Verwendung von Titan bzw. einer Titanbasislegierung als Metallpulver kann der HIP-Prozeß bei einer Temperatur von etwa 950°C bis 1000°C und bei einem Druck zwischen 1000 und 2000bar durchgeführt werden.

Z. B. für einen Verdichterrotor kann sowohl das für die Herstellung des Schaufelringes verwendete Pulvermaterial als auch der Matrixwerkstoff für die Fasern der Faserringe aus einer Titan-Basis-Legierung oder aus einer Titan-Basis-Legierung unter Einschluß intermetallischer Phasen (z. B. TiAl, Ti₃ Al) bestehen. Bei einer Titan-Basislegierung können die Fasern z. B. aus B, B₄C oder SiC gefertigt sein; bei einer Titan-Basis-Legierung unter Einschluß intermetallischer Phasen können die Fasern aus SiC oder A₂O₃ gefertigt sein.

## Patentansprüche

1. Verfahren zur Herstellung eines Schaufelringes (2;2';2") für trommelartig aufgebaute Rotoren von Turbomaschinen, insbesondere Rotoren für Axialverdichter von Gasturbinentriebwerken, das folgende Schritte umfaßt:
a) Mehrere Faserringe (10;10';10") aus in eine Metallmatrix eingebundenen Fasern werden in Metallpulver eingebettet;
b) heißisostatisches Pressen (HIP) der Anordnung nach a), wobei das metallische Material der Faserringe (10;10',10") mit dem Metallpulver durch Oberflächendiffusion verschweißt wird;
c) Nachbearbeitung des so vorgefertigten Schaufelring-Rohlings auf Sollmaß.

2. Verfahren nach Anspruch 1, wobei:
- die Faserringe (10;10';10") in einer Ringkapsel (11;11';11") angeordnet werden,
- die Ringkapsel (11;11';11") mit dem Metallpulver befüllt wird,
- Pulvereinfüllöffnungen der Ringkapsel (11;11';11") hermetisch verschlossen werden,
- der HIP-Vorgang über die Ringkapsel (11;11';11") durchgeführt wird, wobei die Faserringe (10;10';10") in den metallischen Werkstoff des Schaufelringes fest eingebunden werden, und
- nach Entfernung der Ringkapsel (11;11';11") eine spanabhebende Endbearbeitung des Schaufelring-Ronhlings erfolgt.

3. Verfahren nach Anspruch 1 oder 2, wobei die Ringkapsel (11') in Ausbildung beim HIP grob vorzufertigender Axialnuten (9) oder einer Umfangsnut vorgeformt wird, die im Wege nach dem HIP erfolgender Nachbearbeitung des Schaufelring-Rohlings auf die tatsächlich benötigten Formen und Abmessungen der Schaufelfüße fertig bearbeitet werden.

4. Verfahren nach Anspruch 1 oder 2, wobei die Ringkapsel (11') in Ausbildung einer beim HIP vorzufertigenden gemeinsamen äußeren Ringfläche oder mehrerer gleichmäßig über dem Umfang verteilter axialer Fußstümpfe (12) des Schaufelringes (2') vorgeformt wird, wobei die äußere Ringfläche oder die Fußstümpfe (12) nach dem HIP fertig bearbeitet und danach Laufschaufeln (8) mit der Ringfläche oder den Stümpfen durch lineare Reibschweißung verbunden wernden.

5. Verfahren nach Anspruch 1 oder 2, wobei die Ringkapsel (11") unter Ausbildung eines sich an den Schaufelring (2") gemeinsam auf einer Seite über dem Umfang anschließenden Profilabschnitts vergrößert vorgeformt ist, der nach dem HIP zu einzelnen, gleichförmig über den Umfang verteilten Laufschauflen (8) in ein oder mehreren Schritten nachbearbeitet wird.

6. Verfahren nach einem oder mehreren der Ansprüche 2 bis 5, wobei in der Ringkapsel (11) elastische, pulverdurchlässige Mittel so angeordnet werden, daß die Faserringe (10) gegenseitig und gegenüber der Ringkapsel (11) elastisch abgestützt werden.

7. Verfahren nach einem oder mehreren der Ansprüche 1 bis 6, wobei die in eine Metallmatrix eingebetteten Fasern der Faserringe (10,10',10") in einer sich über dem Schaufelringumfang erstreckenden Richtung angeordnet werden.

8. Verfahren nach einem oder mehreren der Ansprüche 1 bis 7, wobei für die Oberflächendiffusion beim HIP-Prozeß gleiche oder gleichartige metallische Werkstoffe für die Matrix der Faserringe und für das Pulvermaterial der Schaufelringe verwendet werden.

9. Verfahren nach einem oder mehreren der Ansprüche 1 bis 8, wobei für die Herstellung des Schaufelringes (2,2',2") Faserringe (10,10',10") verwendet werden, deren Fasern zunächst metallisch beschichtet werden und wobei dann durch einen HIP-Prozeß die einzelnen Metallbeschichtungen der Fasern zu einer gemeinsamen Fasermatrix diffusionsverschweißt werden.

10. Verfahren nach einem oder mehreren der Ansprüche 1 bis 9, wobei die für die Herstellung des Schaufelringes (2,2',2") verwendeten Faserringe (10") aus einem Kern (13) mit sich in Umfangsrichtung des Schaufelringes erstreckenden und in eine Metallmatrix fest eingebundenen Fasern (14) gefertigt werden, und wobei dieser Kern (13) gänzlich mit einer festhaftenden metallischen Oberflächenschicht (15) versehen wird, die beim für die Schaufelringfertigung verantwortlichen HIP-Prozeß mit dem Pulvermaterial des Schaufelringes diffusionsverschweißt wird.

11. Verfahren nach einem oder mehreren der Ansprüche 1 bis 10, wobei die Faserringe mit ihrem jeweiligen Ringmitten in einer drehachskonzentrischen Ringebene größter Umfangs- und Radialbelastung in den Schaufelring drehfest eingebunden werden.

12. Verfahren nach einem oder mehreren der Ansprüche 1 bis 11, wobei für das Pulvermaterial des Schaufelringes und/oder für die Metallmatrix der Faserringe eine Titan-Basislegierung, insbesondere unter Einschluß intermetallischer Phasen verwendet wird.

13. Verfahren zur Herstellung einer Rotortrommel, wobei mehrere Schaufelringe (2, 2', 2"), die gemäß einem Verfahren nach einem oder mehreren der Ansprüche 1 bis 12 gefertigt wurden, unmittelbar oder unter Verwendung von Zwischen- oder Dichtringen (3, 4) zu einer Rotortrommel miteinander verschweißt werden.

## Claims

1. A process for manufacturing a blade ring (2; 2'; 2") for drum-like constructed rotors of turbines, in particular rotors for axial compressors of gas turbine engines, encompassing the following steps:
a) several fibre rings (10; 10'; 10") made of fibres bound in a metal matrix, are embedded in a metal powder;
b) a hot isostatic pressing (HIP) of the arrangement according to a), wherein the metal material of the fibre rings (10; 10'; 10") is welded with the metal powder by surface diffusion;
c) A finishing of the thus pre-fabricated blade ring-blanks to a specified size.

2. A process according to claim 1, wherein:
- the fibre rings (10; 10'; 10") are arranged in a ring capsule (11; 11'; 11")
- the ring capsule (11; 11'; 11") is filled with the metal powder,
- powder filling openings of the ring capsule (11; 11'; 11") are hermetically sealed,
- the HIP process is carried out through the ring capsule (11; 11'; 11"), wherein the fibre rings (10; 10'; 10") are securely bound into the metal material of the blade ring, and
- after removal of the ring capsule (11; 11'; 11"), a finish-machining of the blade ring-blank is carried out.

3. A process according to claim 1 or 2, wherein the ring capsule (11') is pre-formed in the shape, to be coarsely prefabricated during HIP, of axial grooves (9) or of a circumferential groove, which in the course of a reworking of the blade ring blank carried out after the HIP, are finished to the actual required shapes and dimensions of the blade bases.

4. A process according to claim 1 or 2, wherein the ring capsule (11') is pre-formed in the shape, to be prefabricated during HIP, of a common outer ring surface, or of several axial base stumps (12) to be distributed equally over the circumference, of the blade ring (2'), wherein the outer ring surface or the base stumps (12) are finished after HIP and after that, rotor blades (8) are connected to the ring surfaces or the stumps by linear friction welding.

5. A process according to claim 1 or 2, wherein the ring capsule (11") is pre-formed so as to be enlarged, in the shape of a profile section joined to the blade ring (2") together on one side over the circumference, which profile section, after HIP, is reworked in one or several stages into individual, equally shaped rotor blades (8) distributed over the circumference.

6. A process according to one or several of the claims 2 to 5, wherein resilient, powder-permeable means are arranged in the ring capsule (11), in such a way that the fibre rings (10) are resiliently supported mutually and in relation to the ring capsule (11).

7. A process according to one or several of the claims 1 to 6, wherein the fibres of the fibre rings (10; 10'; 10") embedded in a metal matrix are arranged in a direction extending over the blade ring circumference.

8. A process according to one or several of the claims 1 to 7, wherein for the surface diffusion during the HIP process, the same or the same type of metal materials are used for the matrix of the fibre rings and for the powder material of the blade rings.

9. A process according to one or several of the claims 1 to 8, wherein for the manufacture of the blade ring (2; 2'; 2"), fibre rings (10; 10'; 10") are used whose fibres are firstly coated with metal and wherein then the individual metal coatings of the fibres are diffusion-welded by an HIP process to form a common fibre-matrix.

10. A process according to one or several of the claims 1 to 9, wherein the fibre rings (10") used for the manufacture of the blade rings (2; 2'; 2") are made from a core (13) with fibres (14) which extend in the circumferential direction of the blade ring and which are securely embedded in a metal matrix, and wherein this core is provided completely with an adhesive, metal surface coating (15), which is diffusion-welded with the powder material of the blade ring during the HIP process responsible for the blade ring manufacture.

11. A process according to one or several of claims 1 to 10, wherein the fibre rings with their respective ring centres, are bonded in the blade ring so as to be secure against rotation in a ring plane concentric to the rotation axis of the greatest circumferential and radial loading.

12. A process according to one or several of the claims 1 to 11, wherein a titanium-based alloy, in particular including intermetallic phases, is used for the powder material of the blade ring and/or for the metal matrix of the fibre rings.

13. A process for manufacturing a rotor drum, wherein several blade rings (2, 2', 2") which have been manufactured according to a process according to one or several of the claims 1 to 12, are welded together directly or by using intermediate rings or sealing rings (3, 4) to form a rotor drum.

## Revendications

1. Procédé de fabrication d'un anneau d'aubage (2, 2', 2") pour des rotors de turbomachines construits sur le type d'un tambour, en particulier pour des rotors de compresseurs axiaux de moteurs d'entraînement à turbine à gaz,
caractérisé par les étapes suivantes :
a) On noie dans une poudre métallique plusieurs anneaux de fibres (10 : 10' ; 10") qui sont constitués par des fibres liées dans une matrice de métal,
b) On procède au pressage isostatique à chaud (HIP) du dispositif selon a), en soudant la matière métallique des anneaux de fibres (10 ; 10' ; 10") à la poudre métallique par diffusion superficielle,
c) On rectifie l'ébauche d'anneau d'aubage ainsi préparé pour la mettre à la cote de consigne.

2. Procédé selon la revendication 1,
caractérisé en ce que
- les anneaux de fibres (10 ; 10' ; 10") sont disposés dans une capsule annulaire (11 ; 11' ; 11"),
- la capsule annulaire (11 ; 11' ; 11") est remplie de poudre métallique,
- on ferme hermétiquement les orifices de remplissage de poudre de la capsule annulaire (11 ; 11' ; 11").
- on effectue le processus de pressage isostatique à chaud (HIP) sur la capsule annulaire (11 ; 11' ; 11"), les anneaux de fibres (10 ; 10' ; 10") étant liés solidairement dans la matière métallique de l'anneau d'aubage, et
- après l'enlèvement de la capsule annulaire (11 ; 11' ; 11") a lieu un usinage final par enlèvement de copeaux de l'ébauche d'anneau d'aubage.

3. Procédé selon la revendication 1 ou 2,
caractérisé en ce que
la capsule annulaire (11') est préformée en constituant lors du pressage isostatique à chaud HIP des rainures axiales (9) préfabriquées de façon grossière ou une rainure périphérique, qui au cours de la rectification, qui a lieu après le processus de pressage isostatique à chaud HIP, de l'ébauche de bague d'aubage est usinée de façon finale pour recevoir les formes et les dimensions effectivement nécessaires de pieds d'aubage.

4. Procédé selon la revendication 1 ou 2,
caractérisé en ce que
la capsule annulaire (11') est préformée en constituant une surface annulaire extérieure commune préfabriquée lors du processus de pressage isostatique à chaud HIP ou plusieurs moignons axiaux de pieds (12) de l'anneau d'aubage (2'), répartis régulièrement sur le pourtour, la surface annulaire extérieure ou les moignons de pieds (12) étant usinés à la cote finale après le processus de pressage isostatique à chaud HIP et après cela les aubes mobiles (8) étant reliées à la surface annulaire ou aux moignons par soudage linéaire à friction.

5. Procédé selon la revendication 1 ou 2,
caractérisé en ce que
la capsule annulaire (11") est préformée de façon agrandie en constituant une section profilée se raccordant à l'anneau d'aubage (2") en même temps d'un côté sur le pourtour, section qui après le processus de pressage isostatique à chaud, est rectifiée pour obtenir en une ou plusieurs étapes des aubes mobiles individuelles (8) réparties uniformément sur le pourtour.

6. Procédé selon une ou plusieurs des revendications 2 à 5,
caractérisé en ce que
l'on dispose dans la capsule annulaire (11) des moyens élastiques, laissant passer la poudre de telle façon que les anneaux de fibres (10) s'appuient élastiquement les uns contre les autres et contre la capsule annulaire (11).

7. Procédé selon une ou plusieurs des revendications 1 à 6,
caractérisé en ce que
les fibres des anneaux de fibres (10 ; 10' ; 10") qui sont noyées dans une matrice métallique sont disposées dans une direction qui s'étend sur le pourtour de l'anneau d'aubage.

8. Procédé selon une ou plusieurs des revendications 1 à 7,
caractérisé en ce que
l'on utilise pour la diffusion superficielle lors du processus de pressage isostatique à chaud (HIP) des matières métalliques identiques ou de même type pour la matrice des anneaux de fibres et pour la matière pulvérulente des anneaux d'aubage.

9. Procédé selon une ou plusieurs des revendications 1 à 8,
caractérisé en ce que
pour la fabrication de l'anneau d'aubage (2, 2', 2") on utilise des anneaux de fibres (10, 10', 10"), dont les fibres sont d'abord enduites d'une couche métallique et ensuite dont on soude par diffusion par un processus de pressage isostatique à chaud les différentes couches d'enduction métallique de fibres pour obtenir une matrice commune de fibres.

10. Procédé selon une ou plusieurs des revendications 1 à 9,
caractérisé en ce que
- les anneaux de fibres (10"), qui sont utilisés pour la fabrication de l'anneau d'aubage (2, 2', 2"), sont fabriqués à partir d'un noyau (13) avec des fibres (14) qui s'étendent dans le sens périphérique de l'anneau d'aubage et qui sont liées de façon solidaire dans une matrice de métal, et
- ce noyau (13) est pourvu en entier d'une couche superficielle (15) métallique adhésive, qui lors du processus de pressage isostatique à chaud (HIP), qui assure la fabrication de l'anneau d'aubage, est soudé par diffusion avec la matière pulvérulente de l'anneau d'aubage.

11. Procédé selon une ou plusieurs des revendications 1 à 10,
caractérisé en ce que
les anneaux de fibres sont liés de façon solidaire en rotation dans l'anneau d'aubage par leurs centres respectifs dans un plan d'anneau concentrique à l'axe de rotation correspondant à la plus grande charge périphérique et radiale.

12. Procédé selon une ou plusieurs des revendications 1 à 11,
caractérisé en ce qu'
on utilise pour la matière pulvérulente de l'anneau d'aubage et/ou pour la matrice métallique des anneaux de fibres un alliage à base de titane, en particulier en incorporant des phases intermétalliques.

13. Procédé de fabrication d'un tambour de rotor,
caractérisé en ce qu'
on soude les uns aux autres plusieurs anneaux d'aubage (2, 2', 2"), qui ont été fabriqués selon un procédé conforme à une ou plusieurs des revendications 1 à 12, directement ou en utilisant des anneaux intermédiaires ou des anneaux d'étanchéité (3, 4) pour obtenir un tambour de rotor.
